# FASCICULE DE BREVET EUROPEEN

(11) **EP 3 332 094 B1**
(45) Date de publication et mention de la délivrance du brevet: **21.10.2020**
(21) Numéro de dépôt: 16757704.8
(22) Date de dépôt: 02.08.2016
(51) Int. Cl.: F01D 5/14, F01D 5/28, C09J 9/00

(54) **AUBE COMPRENANT UN CORPS D'AUBE EN MATERIAU COMPOSITE ET UN BOUCLIER DE BORD D'ATTAQUE**
SCHAUFEL MIT EINEM SCHAUFELKÖRPER AUS VERBUNDSTOFF UND EINTRITTSKANTENABSCHIRMUNG
BLADE COMPRISING A BLADE BODY MADE OF COMPOSITE MATERIAL AND A LEADING-EDGE SHIELD

(30) Priorité: 07.08.2015 FR 1557612
(43) Date de publication de la demande: 13.06.2018
(73) Titulaire: Safran Aircraft Engines, 75015 Paris (FR)
(72) Inventeur: GIMAT, Matthieu, Arnaud, 77550 Moissy-cramayel Cedex (FR); BASSOT, Alain, Jacques, Michel, 77550 Moissy-cramayel Cedex (FR); GUIVARC'H, Jérémy, 77550 Moissy-cramayel Cedex (FR); MAHIEU, Jean-Noël, 77550 Moissy-cramayel Cedex (FR); RUF, Thibault, 77550 Moissy-cramayel Cedex (FR)
(74) Mandataire: Cabinet Beau de Loménie
(86) Numéro de dépôt international: PCT/FR2016/052010
(87) Numéro de publication internationale: WO 2017/025682

(56) Documents cités:
- EP-A2- 2 586 972
- WO-A1-2014/133546
- WO-A1-2015/034612
- FR-A1- 2 995 037

## Description

### Arrière-plan de l'invention

La présente invention concerne une aube en matériau composite comportant un bouclier de bord d'attaque. De tels boucliers de bord d'attaque sont typiquement destinés à protéger les bords d'attaque d'aubes tournantes ou d'aubes directrices contre les impacts. On entend par « aubes », dans ce contexte, tant les aubes de soufflante que les pales d'hélice aérienne, Afin de limiter leur poids, ces aubes sont typiquement en composite à matrice en polymère renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent sur ces sections de, respectivement, l'intrados et l'extrados de l'aube, et servent principalement à assurer le positionnement et la fixation du bouclier sur le bord d'attaque.

Afin d'améliorer les performances aérodynamiques des aubes, leurs bords d'attaque présentent des formes de plus en plus complexes, ce qui complique la fabrication des boucliers devant épouser ces formes ainsi que la solidarisation du bouclier sur l'aube.

Par ailleurs, lors d'impacts sur une aube, le bouclier peut se désolidariser au moins partiellement du bord d'attaque de l'aube en composite et engendrer un balourd accompagné de pertes d'aérodynamisme. En outre, si une portion du bouclier est arrachée, le bord d'attaque de l'aube n'est plus protégé sur toute sa hauteur, le bord d'attaque de l'aube mis à nu est généralement irrégulier ce qui entraîne également une perte d'aérodynamisme. Il faut alors réparer l'aube et/ou la remplacer.

Une aube de l'état de l'art selon le préambule des revendications 1 et 3 est divulgué dans le document EP2586972A2.

### Objet et résumé de l'invention

La présente invention vise à remédier à ces inconvénients.

A cet effet, l'invention a pour objet une aube selon la revendication 1 ou 3.

Le terme ténacité est communément utilisé pour désigner deux grandeurs physiques, le facteur d'intensité de contrainte critique K_{IC} exprimé en MPa/m^{1/2} et le taux de restitution d'énergie G_{IC} exprimé en kJ/m². Comme la ténacité de la deuxième colle est supérieure à la ténacité de la première colle, la force à appliquer pour décoller le bouclier de bord d'attaque du corps d'aube est plus importante que si l'assemblage entre le corps d'aube et le bouclier était réalisé uniquement avec la première colle.

Aussi, grâce à l'utilisation de deux colles formant un film continu entre le corps d'aube et le bouclier de bord d'attaque, il est possible d'assurer un collage dit de « rétention », sur les parties les plus susceptibles de se décoller suite à un impact sur le bord d'attaque de l'aube ou suite à des contacts entre l'aube et un carter.

On comprend que la première et la deuxième colle ne se mélangent et ne réagissent pas l'une avec l'autre. Ainsi, la première et la deuxième colle ne sont pas deux composés destinés à réagir l'un avec l'autre pour former un collage lors de leur mise en contact l'une avec l'autre.

La première colle peut avoir un module de Young supérieur au module de Young de la deuxième colle.

Comme le module de Young de la première colle est supérieur au module de Young de la deuxième colle, cette première colle permet d'assurer un collage rigide entre le corps d'aube et le bouclier de bord d'attaque. Ce type de collage est également qualifié de collage dit « structurel » entre le corps d'aube et le bouclier de bord d'attaque de sorte que le bouclier de bord d'attaque soit fermement attaché sur le corps d'aube.

Dans la description qui suit les termes « radialement interne » et « radialement externe » se réfèrent aux extrémités de l'aube lorsqu'elle est assemblée sur un rotor, le terme « radialement interne » se référant à l'extrémité de l'aube la plus proche de l'axe de rotation et le terme « radialement externe » se référant à l'extrémité de l'aube la plus éloignée de l'axe de rotation. Il en va de même des extrémités du bouclier.

Le bouclier de bord d'attaque comporte une extrémité radialement interne et une extrémité radialement externe et une hauteur radiale, la deuxième colle peut être disposée au moins sur une partie radialement externe du bouclier de bord d'attaque, de préférence sur les derniers 50% de la hauteur radiale du bouclier de bord d'attaque en partant de l'extrémité radialement interne, encore plus préférentiellement sur les derniers 65% de la hauteur radiale du bouclier de bord d'attaque en partant de l'extrémité radialement interne.

Le terme « hauteur radiale » de bouclier de bord d'attaque est compris comme la distance mesurée entre les projections orthogonales de l'extrémité radialement interne et de l'extrémité radialement externe du bouclier de bord d'attaque sur une droite passant par l'axe de rotation du rotor et ayant au moins une intersection avec l'aube.

La deuxième colle est donc disposée sur la partie radialement externe du bouclier de bord d'attaque, dans la région de l'aube où le bouclier de bord d'attaque est le plus susceptible de se décoller. Par ailleurs, la première colle est donc disposée sur la partie radialement interne du bouclier de bord d'attaque de sorte à former un film continu entre le corps d'aube et le bouclier de bord d'attaque.

Le bouclier de bord d'attaque comporte une aile intrados reliée à une aile extrados par un corps central, chaque aile comprenant un bord libre et une largeur d'aile définie entre le corps central et chaque bord libre, la deuxième colle étant disposée au moins sur une partie de la largeur de chaque aile prise à partir de chaque bord libre, de préférence sur 20% de la largeur de chaque aile, encore plus préférentiellement sur 10% de la largeur de chaque aile.

On dispose ainsi d'une grande surface de collage structurel tout en garantissant un meilleur collage de rétention entre le corps d'aube et le bouclier de bord d'attaque près des bords libres des ailes du bouclier de bord d'attaque qui sont des zones où le risque de décollement du bouclier de bord d'attaque pouvant créer un balourd sont relativement plus élevés que sur une section centrale du bouclier de bord d'attaque, par exempte.

Par ailleurs, la première colle peut être une colle thermodurcissable et la deuxième colle une colle thermoplastique.

Le facteur d'intensité de contrainte critique K_{IC,2} de la deuxième colle peut être par exemple supérieur ou égal à 1.5 MPa/m^{1/2}, de préférence supérieur ou égal à 2 MPa/m^{1/2}.

Le taux de restitution d'énergie G_{IC,2} de la deuxième colle peut être par exemple supérieur ou égal à 0.3 kJ/m², de préférence supérieur ou égal à 1 kJ/m².

Le bouclier de bord d'attaque peut être en alliage à base de titane.

Ce matériau présente une très bonne résistance aux impacts ponctuels.

On entend par alliage à base de titane, des alliages dont la teneur massique en titane est majoritaire. On comprend que le titane est donc l'élément dont la teneur massique dans l'alliage est la plus élevée. L'alliage à base de titane a par exemple une teneur massique d'au moins 50% de titane, de préférence d'au moins 70% de titane, encore plus préférentiellement d'au moins 80% de titane.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique en perspective d'un turboréacteur à double flux ;
- la figure 2 est une vue schématique en perspective d'une aube tournante de la soufflante du turboréacteur de la figure 1 selon un premier mode de réalisation de l'aube ;
- la figure 3 est une vue schématique en perspective d'un bouclier de bord d'attaque de l'aube de la figure 2 ;
- la figure 4 est une vue en coupe transversale, suivant le plan IV-IV, du bouclier de la figure 3 ;
- la figure 5 est une vue schématique en perspective d'une aube tournante de la soufflante du turboréacteur de la figure 1 selon un deuxième mode de réalisation de l'aube ; et
- la figure 6 est une vue schématique en perspective d'une aube tournante de la soufflante du turboréacteur de la figure 1 selon un troisième mode de réalisation de l'aube.

### Description détaillée de l'invention

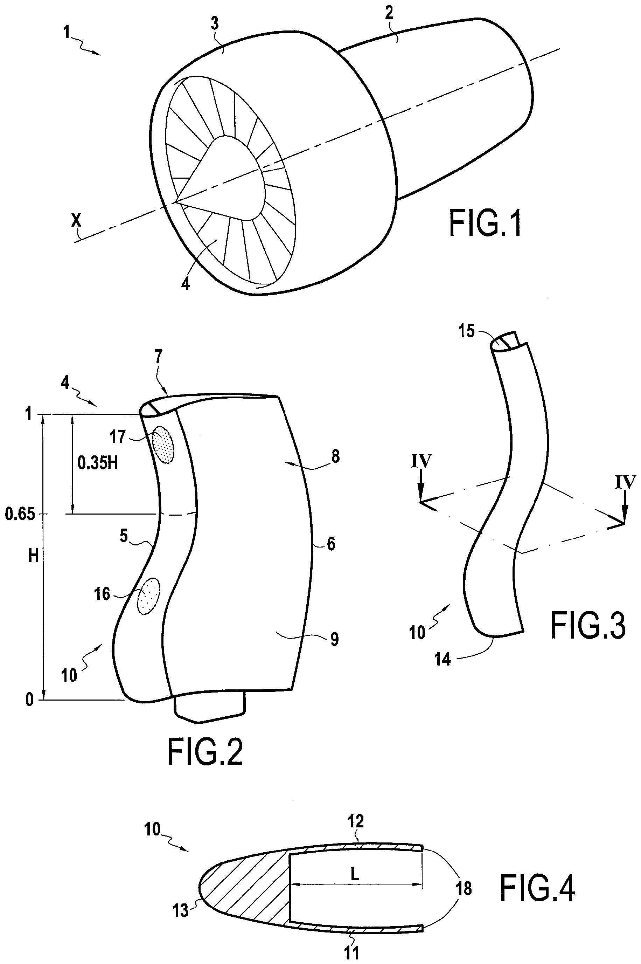

La figure 1 illustre un turboréacteur à double flux 1 comprenant un groupe générateur de gaz 2 et une soufflante 3. Cette soufflante 3 comprend une pluralité d'aubes tournantes 4, arrangées radialement autour d'un axe central X, et profilées aérodynamiquement de manière à impulser l'air par leur rotation. Ainsi, comme illustré sur la figure 2, chaque aube 4 présente un bord d'attaque 5, un bord de fuite 6, un extrados 7 et un intrados 8.

En fonctionnement normal, le vent relatif est sensiblement orienté vers le bord d'attaque 5 de chaque aube 4. Ainsi, ce bord d'attaque 5 est particulièrement exposé aux impacts. En particulier quand l'aube 4 comprend un corps d'aube 9 en matériau composite, notamment à matrice polymère renforcée par des fibres, il convient donc de protéger le bord d'attaque 5 avec un bouclier 10 intégré à chaque aube.

Les figures 3 et 4 illustrent ce bouclier 10 qui présente une ailette intrados 11, une ailette extrados 12 et une section centrale 13 plus épaisse, destinée à chevaucher un bord du corps d'aube 9 et reliant l'ailette intrados 11 et l'ailette extrados 12. Les ailettes intrados et extrados 11, 12 assurent le positionnement du bouclier 10 sur le corps d'aube 9.

Le bouclier 10 comporte également une extrémité radialement Interne 14 et une extrémité radialement externe 15. Comme on peut le voir sur la figure 2, les projections orthogonales de l'extrémité radialement interne 14 et de l'extrémité radialement externe 15 du bouclier 10 sur une droite passant par l'axe de rotation du rotor et ayant au moins une intersection avec l'aube 4 définissent une hauteur radiale H de bouclier 10, définissant une hauteur de référence de ce bouclier 10.

A l'opposé de la section centrale 13, les ailettes intrados et extrados 11, 12 comportent chacune un bord libre 18. La largeur L de chaque ailette 11, 12 est définie entre le corps central 13 et chaque bord libre 18.

Le bouclier de bord d'attaque 10 est principalement métallique, et plus spécifiquement en alliage à base de titane, comme par exemple le TA6V (Ti-6Al-4V). Le bouclier de bord d'attaque 10 pourrait également être en acier ou en alliage à base de fer, de chrome et de nickel comme par exemple les Inconels.

Sur la figure 2, le bouclier de bord d'attaque 10 comporte une extrémité radialement interne 14 et une extrémité radialement externe 5 et une hauteur radiale H, la deuxième colle 17 est disposée sur 35% de la hauteur radiale du bouclier de bord d'attaque 10 en partant de l'extrémité radialement externe 15, c'est-à-dire sur les derniers 65% de la hauteur radiale H du bouclier de bord d'attaque 10 en partant de l'extrémité radialement interne 14.

Ainsi, comme la première colle 16 a un module de Young E₁ supérieur au module de Young E₂ de la deuxième colle 17, un collage structurel est assuré entre le bouclier de bord d'attaque 10 et le corps d'aube 4 sur la partie de la hauteur radialement interne du bouclier de bord d'attaque 10 en partant de l'extrémité radialement interne 14 couverte par la première colle 16.

En outre, comme la deuxième colle 17 a un facteur d'intensité de contrainte critique K_{IC,2} et un taux de restitution d'énergie G_{IC,2} respectivement supérieurs au facteur d'intensité de contrainte critique K_{IC,1} et au taux de restitution d'énergie G_{IC,1} de la première colle 16, la partie de la hauteur radiale du bouclier de bord d'attaque 10 en partant de l'extrémité radialement externe 15 couverte par la deuxième colle 17 permet de mieux absorber les impacts et d'éviter un décollement du bouclier de bord d'attaque 4 du corps d'aube 9.

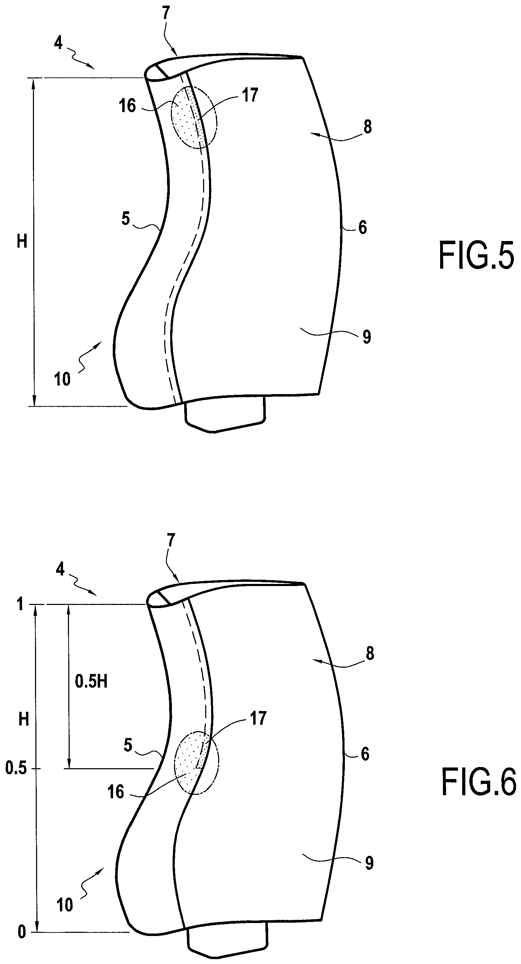

Sur la figure 5, on a représenté une aube 4 dans laquelle, la deuxième colle 17 est disposée sur la largeur de chaque aile prise à partir de chaque bord libre 18, par exemple sur 20% de la largeur de chaque aile.

Sur la figure 6, le bouclier de bord d'attaque 10 est assemblé sur le corps d'aube 9 par un film continu de colle, la deuxième colle 17 étant disposée sur une partie des 50% de la hauteur radiale du bouclier de bord d'attaque 10 en partant de l'extrémité radialement externe 15, c'est-à-dire sur les derniers 50% de la hauteur radiale H du bouclier de bord d'attaque 10 en partant de l'extrémité radialement interne 14, et dans cet exemple sur 10 % de la largeur de chaque aile 11, 12 prise à partir de chaque bord libre 18. Ou inversement, la deuxième colle 17 est disposée sur une partie des 10% de la largeur de chaque aile 11, 12 prise à partir de chaque bord libre 18, cette partie étant égale à 50% de la hauteur radiale du bouclier de bord d'attaque 10 en partant de l'extrémité radialement externe 15, c'est-à-dire sur les derniers 50% de la hauteur du bouclier de bord d'attaque 10 en partant de l'extrémité radialement interne 14.

Ainsi, on assure un collage structurel sur toute la hauteur H du bouclier de bord d'attaque 10 et on utilise la deuxième colle 17 près des bords libres 18 des ailettes intrados 11 et extrados 12. Aussi, si des impacts sont reçus par la partie radialement externe du bouclier de bord d'attaque 10, même si des fissurations apparaissent entre le bouclier de bord d'attaque 10 et le corps d'aube 9 dans la partie radialement externe du bouclier de bord d'attaque 10, le bouclier de bord d'attaque 10 est fermement maintenu sur le corps d'aube 9 grâce à la bande constituée de la deuxième colle 17 localisée près de chaque bord libres 18 du bouclier de bord d'attaque 10. La largeur de cette bande de colle est suffisante que pour garantir la fonction de rétention du bouclier de bord d'attaque 10 sur le corps d'aube 9.

La première colle 16 peut être une colle thermodurcissable. Aussi, une fois la première colle 16 a pris, il n'est pas possible de décoller le bouclier de bord d'attaque 10 du corps d'aube 9 en chauffant l'aube 4. Sous l'effet d'impacts, la ténacité de la première colle étant inférieure à la ténacité de la deuxième colle, des fissures peuvent apparaître et entrainer à terme un décollement du bouclier.

La deuxième colle 17 peut être une colle thermoplastique. Ce type de colle a l'avantage d'avoir des valeurs de la ténacité qui sont supérieures aux valeurs de ténacité des colles thermodurcissables. Aussi, bien que le collage obtenu à l'aide d'une colle thermoplastique peut être réversible en chauffant la pièce au-delà d'une température seuil propre à chaque colle thermoplastique, cette deuxième colle 17 permet de mieux absorber les chocs et d'éviter la dégradation du collage entre le bouclier de bord d'attaque 10 et le corps d'aube 9.

La colle commercialisée par 3M sous la référence AF191 est un exemple de colle pouvant être utilisée comme première colle. C'est une colle thermodurcissable dont le module de Young E₁ est égal à 100 MPa, dont le facteur d'intensité de contrainte critique K_{IC,1} est d'environ 1 MPa/m^{1/2} et dont le taux de restitution d'énergie G_{IC,1} est d'environ 0.2 kJ/m².

Le polyétheréthercétone aussi connu sous l'acronyme PEEK pour PolyEtherEtherKetone en anglais, est un exemple de colle pouvant être utilisée comme deuxième colle. C'est une colle thermoplastique dont le module de Young E₂ est égal à 3,6 GPa, dont le facteur d'intensité de contrainte critique K_{IC,2} est supérieur à 2 MPa/m^{1/2} et dont le taux de restitution d'énergie G_{IC,1} est supérieur à 1 kJ/m².

Quoique la présente invention ait été décrite en se référant à plusieurs exemples de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif,

## Revendications

1. Aube (4) comprenant un corps d'aube (9) en matériau composite à matrice en polymère renforcée par des fibres et un bouclier de bord d'attaque (10) en un matériau ayant une meilleure résistance aux impacts ponctuels que le matériau composite du corps d'aube, **caractérisé en ce que** le bouclier de bord d'attaque (10) est assemblé au corps d'aube (9) au moyen d'une première colle (16) et d'une deuxième colle (17), les deux colles (16, 17) étant disposées entre le corps d'aube (9) et le bouclier de bord d'attaque (10), les deux colles (16, 17) formant un film continu entre le corps d'aube (9) et le bouclier de bord d'attaque (10), la deuxième colle (17) ayant un facteur d'intensité de contrainte critique (K_{IC,2}) et un taux de restitution d'énergie (G_{IC,2}) supérieurs respectivement à un facteur d'intensité de contrainte critique (K_{IC,1}) et à un taux de restitution d'énergie (G_{IC,1}) de la première colle (16), le bouclier de bord d'attaque comportant une aile intrados (11) reliée à une aile extrados (12) par un corps central (13), chaque aile comprenant un bord libre (18) et une largeur d'aile (L) définie entre le corps central (13) et chaque bord libre (18), la deuxième colle étant disposée au moins sur une partie de la largeur de chaque aile prise à partir de chaque bord libre.

2. Aube (4) selon la revendication 1, dans laquelle le bouclier de bord d'attaque (10) comporte une extrémité radialement interne (14) et une extrémité radialement externe (15) et une hauteur radiale (H) définie entre ces deux extrémités (14, 15), la deuxième colle (17) étant disposée au moins sur une partie radialement externe du bouclier de bord d'attaque (10).

3. Aube (4) comprenant un corps d'aube (9) en matériau composite à matrice en polymère renforcée par des fibres et un bouclier de bord d'attaque (10) en un matériau ayant une meilleure résistance aux impacts ponctuels que le matériau composite du corps d'aube, **caractérisé en ce que** le bouclier de bord d'attaque (10) est assemblé au corps d'aube (9) au moyen d'une première colle (16) et d'une deuxième colle (17), les deux colles (16, 17) étant disposées entre le corps d'aube (9) et le bouclier de bord d'attaque (10), les deux colles (16, 17) formant un film continu entre le corps d'aube (9) et le bouclier de bord d'attaque (10), la deuxième colle (17) ayant un facteur d'intensité de contrainte critique (K_{IC,2}) et un taux de restitution d'énergie (G_{IC,2}) supérieurs respectivement à un facteur d'intensité de contrainte critique (K_{IC,1}) et à un taux de restitution d'énergie (G_{IC,1}) de la première colle (16), le bouclier de bord d'attaque (10) comportant une extrémité radialement interne (14) et une extrémité radialement externe (15) et une hauteur radiale (H) définie entre ces deux extrémités (14, 15), la deuxième colle (17) étant disposée au moins sur une partie radialement externe du bouclier de bord d'attaque (10).

4. Aube (4) selon la revendication 3, dans laquelle le bouclier de bord d'attaque comportant une aile intrados (11) reliée à une aile extrados (12) par un corps central (13), chaque aile comprenant un bord libre (18) et une largeur d'aile (L) définie entre le corps central (13) et chaque bord libre (18), la deuxième colle étant disposée au moins sur une partie de la largeur de chaque aile prise à partir de chaque bord libre.

5. Aube (4) selon la revendication 2 ou 3, dans laquelle la deuxième colle (17) est disposée sur les derniers 50% de la hauteur radiale du bouclier de bord d'attaque en partant de l'extrémité radialement interne.

6. Aube (4) selon la revendication 2 ou 3, dans laquelle la deuxième colle (17) est disposée sur les derniers 65% de la hauteur radiale du bouclier de bord d'attaque en partant de l'extrémité radialement interne.

7. Aube (4) selon la revendication 1 ou 4, dans laquelle la deuxième colle (17) est disposée sur 20% de la largeur de chaque aile.

8. Aube (4) selon la revendication 1 ou 4, dans laquelle la deuxième colle (17) est disposée sur 10% de la largeur de chaque aile.

9. Aube (4) selon l'une quelconque des revendications 1 à 8, dans laquelle la première colle (16) a un module de Young (E₁) supérieur au module de Young (E₂) de la deuxième colle (17).

10. Aube (4) selon l'une quelconque des revendications précédentes, dans laquelle la première colle (16) est une colle thermodurcissable et la deuxième colle (17) est une colle thermoplastique.

11. Aube (4) selon l'une quelconque des revendications précédentes, dans laquelle le facteur d'intensité de contrainte critique (K_{IC,2}) de la deuxième colle (17) est supérieur ou égal à 1.5 MPa/m^{1/2}.

12. Aube (4) selon l'une quelconque des revendications 1 à 10, dans laquelle le facteur d'intensité de contrainte critique (K_{IC,2}) de la deuxième colle (17) est supérieur ou égal à 2 MPa/m^{1/2}.

13. Aube (4) selon l'une quelconque des revendications précédentes, dans laquelle le taux de restitution d'énergie (G_{IC, 2}) de la deuxième colle (17) est supérieur ou égal à 0.3 kJ/m².

14. Aube (4) selon l'une quelconque des revendications 1 à 12, dans laquelle le taux de restitution d'énergie (G_{IC, 2}) de la deuxième colle (17) est supérieur ou égal à 1 kJ/m².

15. Aube (4) selon l'une quelconque des revendications précédentes, dans laquelle le bouclier de bord d'attaque est en alliage à base de titane.

## Patentansprüche

1. Schaufel (4), umfassend einen Schaufelkörper (9) aus Verbundwerkstoff mit einer faserverstärkten Polymermatrix und einem Vorderkantenschutzschild (10) aus einem Material, das eine bessere Widerstandsfähigkeit gegenüber punktuellen Aufschlägen als der Verbundwerkstoff des Schaufelkörpers aufweist, **dadurch gekennzeichnet, dass** der Vorderkantenschutzschild (10) mittels eines ersten Klebstoffs (16) und eines zweiten Klebstoffs (17) mit dem Schaufelkörper (9) verbunden ist, wobei die beiden Klebstoffe (16, 17) zwischen dem Schaufelkörper (9) und dem Vorderkantenschutzschild (10) angeordnet sind, wobei die beiden Klebstoffe (16, 17) einen durchgehenden Film zwischen dem Schaufelkörper (9) und dem Vorderkantenschutzschild (10) bilden, wobei der zweite Klebstoff (17) einen kritischen Spannungsintensitätsfaktor (K_{IC,2}) und eine Energiefreisetzungsrate (G_{IC,2}) aufweist, die größer als ein kritischer Spannungsintensitätsfaktor (K_{IC,1}) bzw. eine Energiefreisetzungsrate (G_{IC,1}) des ersten Klebstoffs (16) sind, wobei der Vorderkantenschutzschild einen Vorderseitenflügel (11) umfasst, der mit einem Rückseitenflügel (12) durch einen mittleren Körper (13) verbunden ist, wobei jeder Flügel eine freie Kante (18) und eine Flügelbreite (L) aufweist, die zwischen dem mittleren Körper (13) und jeder freien Kante (18) definiert ist, wobei der zweite Klebstoff wenigstens auf einem Teil der von jeder freien Kante ausgehend genommenen Breite eines jeden Flügels angeordnet ist.

2. Schaufel (4) nach Anspruch 1, wobei der Vorderkantenschutzschild (10) ein radial inneres Ende (14) und ein radial äußeres Ende (15) sowie eine radiale Höhe (H) aufweist, die zwischen diesen beiden Enden (14, 15) definiert ist, wobei der zweite Klebstoff (17) wenigstens auf einem radial äußeren Teil des Vorderkantenschutzschilds (10) angeordnet ist.

3. Schaufel (4), umfassend einen Schaufelkörper (9) aus Verbundwerkstoff mit einer faserverstärkten Polymermatrix und einem Vorderkantenschutzschild (10) aus einem Material, das eine bessere Widerstandsfähigkeit gegenüber punktuellen Aufschlägen als der Verbundwerkstoff des Schaufelkörpers aufweist, **dadurch gekennzeichnet, dass** der Vorderkantenschutzschild (10) mittels eines ersten Klebstoffs (16) und eines zweiten Klebstoffs (17) mit dem Schaufelkörper (9) verbunden ist, wobei die beiden Klebstoffe (16, 17) zwischen dem Schaufelkörper (9) und dem Vorderkantenschutzschild (10) angeordnet sind, wobei die beiden Klebstoffe (16, 17) einen durchgehenden Film zwischen dem Schaufelkörper (9) und dem Vorderkantenschutzschild (10) bilden, wobei der zweite Klebstoff (17) einen kritischen Spannungsintensitätsfaktor (K_{IC,2}) und eine Energiefreisetzungsrate (G_{IC,2}) aufweist, die größer als ein kritischer Spannungsintensitätsfaktor (K_{IC,1}) bzw. eine Energiefreisetzungsrate (G_{IC,1}) des ersten Klebstoffs (16) sind, wobei der Vorderkantenschutzschild (10) ein radial inneres Ende (14) und ein radial äußeres Ende (15) sowie eine radiale Höhe (H) aufweist, die zwischen diesen beiden Enden (14, 15) definiert ist, wobei der zweite Klebstoff (17) wenigstens auf einem radial äußeren Teil des Vorderkantenschutzschilds (10) angeordnet ist.

4. Schaufel (4) nach Anspruch 3, bei der der Vorderkantenschutzschild einen Vorderseitenflügel (11) umfasst, der durch einen mittleren Körper (13) mit einem Rückseitenflügel (12) verbunden ist, wobei jeder Flügel eine freie Kante (18) und eine Flügelbreite (L) aufweist, die zwischen dem mittleren Körper (13) und jeder freien Kante (18) definiert ist, wobei der zweite Klebstoff wenigstens auf einem Teil der von jeder freien Kante ausgehend genommenen Breite eines jedes Flügels angeordnet ist.

5. Schaufel (4) nach Anspruch 2 oder 3, bei der der zweite Klebstoff (17), ausgehend von dem radial inneren Ende, auf den letzten 50 % der radialen Höhe des Vorderkantenschutzschilds angeordnet ist.

6. Schaufel (4) nach Anspruch 2 oder 3, bei der der zweite Klebstoff (17), ausgehend von dem radial inneren Ende, auf den letzten 65 % der radialen Höhe des Vorderkantenschutzschilds angeordnet ist.

7. Schaufel (4) nach Anspruch 1 oder 4, bei der der zweite Klebstoff (17) über 20 % der Breite eines jeden Flügels angeordnet ist.

8. Schaufel (4) nach Anspruch 1 oder 4, bei der der zweite Klebstoff (17) über 10 % der Breite eines jeden Flügels angeordnet ist.

9. Schaufel (4) nach einem der Ansprüche 1 bis 8, bei der der erste Klebstoff (16) einen Elastizitätsmodul (E₁) aufweist, der größer als der Elastizitätsmodul (E₂) des zweiten Klebstoffs (17) ist.

10. Schaufel (4) nach einem der vorhergehenden Ansprüche, bei der der erste Klebstoff (16) ein duroplastischer Klebstoff und der zweite Klebstoff (17) ein thermoplastischer Klebstoff ist.

11. Schaufel (4) nach einem der vorhergehenden Ansprüche, bei der der kritische Spannungsintensitätsfaktor (K_{IC,2}) des zweiten Klebstoffs (17) größer oder gleich 1,5 MPa/m^{1/2} ist.

12. Schaufel (4) nach einem der Ansprüche 1 bis 10, bei der der kritische Spannungsintensitätsfaktor (K_{IC,2}) des zweiten Klebstoffs (17) größer oder gleich 2 MPa/m^{1/2} ist.

13. Schaufel (4) nach einem der vorhergehenden Ansprüche, bei der die Energiefreisetzungsrate (G_{IC, 2}) des zweiten Klebstoffs (17) größer oder gleich 0,3 kJ/m² ist.

14. Schaufel (4) nach einem der Ansprüche 1 bis 12, bei der die Energiefreisetzungsrate (G_{IC, 2}) des zweiten Klebstoffs (17) größer oder gleich 1 kJ/m² ist.

15. Schaufel (4) nach einem der vorhergehenden Ansprüche, bei der der Vorderkantenschutzschild aus einer Legierung auf Titanbasis besteht.

## Claims

1. Blade (4) comprising a blade body (9) made of composite material having a polymer matrix reinforced by fibers and a leading edge shield (10) made of material having greater ability to withstand point impacts than the composite material of the blade body, the blade being **characterized in that** the leading edge shield (10) is assembled on the blade body (9) by means of a first adhesive (16) and a second adhesive (17), both adhesives (16, 17) being deposited between the blade body (9) and the leading edge shield (10), both adhesives (16, 17) forming respective continuous films between the blade body (9) and the leading edge shield (10), the second adhesive (17) having a critical stress intensity factor (K_{IC,2}) and a fracture toughness (G_{IC,2}) that are greater respectively than a critical stress intensity factor (K_{IC, 1}) and a fracture toughness (G_{IC, 1}) of the first adhesive (16), wherein the leading edge shield has a pressure side fin (11) connected to a suction side fin (12) by a central body (13), each fin having a free edge (18) and a fin width (L) defined between the central body (13) and the corresponding free edge (18), the second adhesive being deposited at least over a portion of the width of each fin measured from each free edge.

2. Blade (4) according to claim 1, wherein the leading edge shield (10) has a radially inner end (14) and a radially outer end (15) and a radial height (H) defined between these two ends (14, 15), and the second adhesive (17) is deposited at least over a radially outer portion of the leading edge shield (10).

3. Blade (4) comprising a blade body (9) made of composite material having a polymer matrix reinforced by fibers and a leading edge shield (10) made of material having greater ability to withstand point impacts than the composite material of the blade body, the blade being **characterized in that** the leading edge shield (10) is assembled on the blade body (9) by means of a first adhesive (16) and a second adhesive (17), both adhesives (16, 17) being deposited between the blade body (9) and the leading edge shield (10), both adhesives (16, 17) forming respective continuous films between the blade body (9) and the leading edge shield (10), the second adhesive (17) having a critical stress intensity factor (KIC,2) and a fracture toughness (GIC,2) that are greater respectively than a critical stress intensity factor (KIC,1) and a fracture toughness (GIC,1) of the first adhesive (16), wherein the leading edge shield (10) has a radially inner end (14) and a radially outer end (15) and a radial height (H) defined between these two ends (14, 15), and the second adhesive (17) is deposited at least over a radially outer portion of the leading edge shield (10) .

4. Blade (4) according to claim 3, the leading edge shield has a pressure side fin (11) connected to a suction side fin (12) by a central body (13), each fin having a free edge (18) and a fin width (L) defined between the central body (13) and the corresponding free edge (18), the second adhesive being deposited at least over a portion of the width of each fin measured from each free edge

5. Blade (4) according to claim 2 or 3, wherein the second adhesive (17) is deposited over the last 50% of the radial height of the leading edge shield starting from the radially inner end.

6. lade (4) according to claim 2 or 3, wherein the second adhesive (17) is deposited over the last 65% of the radial height of the leading edge shield starting from the radially inner end.

7. Blade (4) according to claim 1 or 4, wherein the second adhesive (17) is deposited over 20% of the width of each fin.

8. Blade (4) according to claim 1 or 4, wherein the second adhesive (17) is deposited over 10% of the width of each fin.

9. Blade (4) according to any of claims 1 to 8, wherein the first adhesive (16) has a Young's modulus (E1) greater than the Young's modulus (E2) of the second adhesive (17).

10. Blade (4) according to any preceding claim, wherein the first adhesive (16) is a thermosetting adhesive and the second adhesive (17) is a thermoplastic adhesive.

11. Blade (4) according to any preceding claim, wherein the critical stress intensity factor (K_{IC, 2}) of the second adhesive (17) is greater than or equal to 1.5 MPa/m^{1/2}.

12. Blade (4) according to any one of claims 1 to 10, wherein the critical stress intensity factor (K_{IC, 2}) of the second adhesive (17) is greater than or equal to 2 MPa/m^{1/2}.

13. Blade (4) according to any preceding claim, wherein the fracture toughness (G_{IC,2}) of the second adhesive (17) is greater than or equal to 0.3 kJ/m².

14. Blade (4) according to any one of claims 1 to 12, wherein the fracture toughness (G_{IC,2}) of the second adhesive (17) is greater than or equal to 1 kJ/m².

15. Blade (4) according to any preceding claim, wherein the leading edge shield is made of a titanium-based alloy.
